Europäisches Patentamt

European Patent Office

Office européen des brevets

(11) Veröffentlichungsnummer: **0 352 676**
**A2**

(12) **EUROPÄISCHE PATENTANMELDUNG**

(21) Anmeldenummer: **89113516.2**

(22) Anmeldetag: **22.07.89**

(51) Int. Cl.⁴: **G01K 11/16**

(30) Priorität: **28.07.88 DE 3825583**

(43) Veröffentlichungstag der Anmeldung:
**31.01.90 Patentblatt 90/05**

(84) Benannte Vertragsstaaten:
**AT BE CH DE ES FR GB GR IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Groh, Werner, Dr.**
**Geisenheimer Strasse 93**
**D-6000 Frankfurt am Main 71(DE)**
Erfinder: **Coutandin, Jochen, Dr.**
**Pestalozzistrasse 9**
**D-6365 Langenlonsheim(DE)**
Erfinder: **Herbrechtsmeier, Peter, Dr.**
**Friedrich-Stolze-Strasse 10**
**D-6240 Königstein/Taunus(DE)**
Erfinder: **Theis, Jürgen, Dr.**
**Am Tiergarten 40**
**D-6000 Frankfurt am Main(DE)**

(54) **Temperatursensor.**

㊙ Ein neuer Temperatursensor besteht aus einer Schutzkappe, in welcher sich ein Flüssigkristall befindet und in welcher mindestens ein Lichtwellenleiter endet. Die Reflexion des in den Flüssigkristall eingestrahlten Lichtes ist von der Temperatur abhängig und kann zur Temperaturmessung angewendet werden. Die Genauigkeit ist ± 0,1 °C.

**Fig. 1**

EP 0 352 676 A2

# Temperatursensor

Die Erfindung bezieht sich auf einen Temperatursensor, welcher aus einem temperaturempfindlichen Element in Form eines Flüssigkristalls und mindestens einem Lichtwellenleiter besteht.

Flüssigkristalle werden schon seit langem in der Technik für Temperaturmessungen eingesetzt. Sie besitzen die Eigenschaft, daß sich ihre chirale molekulare Orientierung, d.h. die Ganghöhe der Helix, mit der temperatur ändert. In der Regel wird mit steigender Temperatur die Ganghöhe niedriger. Word die Ganghöhe so eingestellt, daß bei einer vorgegebenen unteren Temperaturgrenze rotes Licht total reflektiert wird, so zeigt der Flüssigkristall eine rote Färbung. Wird die Temperatur erhöht, so ändert das reflektierte Licht seine Farbe über gelb, grün bis hin zu blau (vgl. Bacci et al., Applied Optics 25, S.1079-1082 (1986); Smith et al., Applied Phys. Letters 24, S.453-454 (1974).

Der Nachteil bisheriger Flüssigkristall-Anwendungen in der Temperaturmeßtechnik besteht darin, daß die Farbe und damit die Temperatur visuell beurteilt werden und die Maßgenauigkeit nicht ausreicht.

Aufgabe war daher, einen Temperatursensor auf Basis eines Flüssigkristalls zu finden, welcher eine hohe Maßgenauigkeit besitzt.

Es wurde gefunden, daß die Aufgabe durch einen Temperatursensor gelöst werden kann, welcher aus einem Flüssigkristall und mindestens einem Lichtwellenleiter besteht.

Die Erfindung betrifft somit einen Temperatursensor, bestehend aus einer Schutzkappe, in welcher sich ein chiral nematischer Flüssigkristall mit helixförmiger molekularer Orientierung befindet und in welcher mindestens ein Lichtwellenleiter endet.

Der erfindungsgemäße Temperatursensor besteht aus einer Schutzkappe, in welcher sich das temperaturempfindliche Element befindet und in welcher mindestens ein Lichtwellenleiter endet.

Die Kappe hat in der Regel die Form eines zylindrischen Rohres, welches an der einen Stirnseite offen und an der anderen Stirnseite verschlossen ist. Die Abmessungen der kappe richten sich nach der Größe des temperaturempfindlichen Elements und nach dem Durchmesser des oder der Lichtwellenleiter. Die Wandstärke beträgt 0,1 bis 5, vorzugsweise 0,1 bis 1 mm an den runden Seiten und 0,1 bis 5, vorzugsweise 0,1 bis 1 mm an der verschlossenen Stirnseite. Die Kappe besteht vorzugsweise aus einem gut wärmeleitenden Material, beispielsweise einem Metall, vorzugsweise Aluminium. Jedoch ist auch Kunststoff oder Keramik als Kappenmaterial geeignet, sofern die Wandstärke gering genug ist. Geeignete Kunststoffe sind beispielsweise Polyethylen, Polypropylen, Polyvinylchlorid, Polyacrylate, Polymethacrylate, Polyethylentherephthalat, Polytetrafluorethylen, Polyvinylidenfluorid oder Kleber auf Polymerbasis.

Geeignete Keramiken sind z.B. Aluminiumnitrid oder Siliziumcarbid.

Das temperaturempfindliche Element ist ein chiral nematischer Flüssigkristall mit helixförmiger molekularer Orientierung. Für die Anwendung besonders geeignet sind Flüssigkristalle des erwähnten chiral nematischen Typs, da sie chemisch und photochemisch wesentlich stabiler sind als cholesterische (d.h. auf Cholesterin-Verbindung beruhende Flüssigkristalle, die ebenfalls für Temperaturmessungen eingesetzt werden).

Der Flüssigkristall kann mikroverkapselt oder unverkapselt sein.

Der Flüssigkristall befindet sich vorzugsweise in Mikrokapseln, welche in einem Lack oder einer wasserlöslichen Polymermatrix, beispielsweise Polyvinylalkohol, eingebettet sind. Verwendbar sind auch unverkapselte Flüssigkristalle, die allerdings durch äußere Einflüsse (z.B. UV-Licht) leichter zerstört werden und weniger leicht zu handhaben sind. Der Flüssigkristall befindet sich als Schicht im Innern der Kappe zwischen der Innenseite ihrer verschlossenen Stirnwand und der Stirnfläche des oder der Lichtwellenleiter und ist 0,005 bis 0,3, vorzugsweise 0,01 bis 0,05 mm dick.

Für die Lackschicht eignen sich bevorzugt lösemittelfreie bzw. lösemittelarme Formulierungen, da Lösemittel die Helixstruktur des Flüssigkristalls verändern oder zerstören können. Zur Verbesserung der Streckenneutralität kann dem Lack ein Weißpigment zugesetzt werden.

In der Schutzkappe endet mindestens ein Lichtwellenleiter an der offenen Stirnseite gegenüber dem temperaturempfindlichen Element. Es kann ein einzelner Lichtwellenleiter sein, es können jedoch auch mehrere Lichtwellenleiter sein, welche gegebenenfalls gruppenweise gebündelt sind. Das Bündeln wird vorzugsweise durch einen übergezogenen Polymer-Schrumpfschlauch bewirkt.

Der Lichtwellenleiter besteht aus einem Kern und einem Mantel, wobei das Mantelmaterial einen geringfügig niedrigeren Brechungsindex besitzt als das Kernmaterial. Kern und Mantel können aus Glas, vorzugsweise Quarzglas, oder Kunststoff bestehen. Bevorzugte Kombinationen sind Kern aus Glas, Mantel aus Kunststoff sowie Kern aus Kunststoff, Mantel aus Kunststoff. Besonders bevorzugt bestehen Kern und Mantel aus Kunststoff.

Geeignete Kunststoffe für den kern sind beispielsweise Polymethylmethacrylat, Polystyrol, Polycarbonat, Polyfluoracrylate oder Polyfluormethacrylate.

Geeignete Kunststoffe für den Mantel sind beispielsweise Polyfluoracrylate oder Polyfluormethacrylate. Diese können Copolymers aus Vinylidenfluorid und Tetrafluorethylen sein.

Der Durchmesser des Lichtwellenleiters beträgt 0,05 bis 3, vorzugsweise 0,5 bis 1,0 mm.

In der Regel berührt der Lichtwellenleiter mit seiner polierten Stirnfläche die Oberfläche des Flüssigkristalls. Es ist jedoch in manchen Fällen möglich und notwendig, daß zwischen Lichtwellenleiter und Flüssigkristall ein Spalt verbleibt, dessen Größe etwa dem zwei- bis Siebenfachen des Durchmessers eines Lichtwellenleiters entspricht.

Die Herstellung des erfindungsgemäßen Temperatursensors kann auf verschiedene Weise erfolgen.

Bei einer Methode werden die in einer wäßrigen Polymerlösung eingearbeiteten Flüssigkristallkapseln auf die polierte Stirnfläche des Lichtwellenleiters aufgetragen. Nach der Trennung wird über den Lichtwellenleiter die Schutzkappe, welche innen geschwärzt ist, geschoben und der Lichtwellenleiter mit einer geeigneten Siegelmasse, beispielsweise einem Epoxykleber, in der Schutzkappe eingeklebt. Es ist auch möglich, den Flüssigkristall auf der Innenseite der geschlossenen Stirnwand der Schutzkappe abzuscheiden.

Vorzugsweise wird der Flüssigkristall mikroverkapselt in einen Lack eingearbeitet, dessen Zusammensetzung bereits beschrieben wurde. Dieser Lack wird entweder auf die Stirnseite· des Lichtwellenleiters oder auf die Innenseite der geschlossenen Stirnwand der Schutzkappe aufgetragen.

Zum Schutz gegen UV-Licht, welches von de Meßbeleuchtung herrühren kann, ist es empfehlenswert, ein UV-Sperrfilter vorzusehen. Dieses Sperrfilter wird zweckmäßigerweise zwischen Lichtquelle und Lichtwellenleiter angeordnet.

Zur Temperaturmessung wird der erfindungsgemäße Temperatursensor mittels des Lichtwellenleiters mit einem Meßgerät verbunden, welches eine Lichtquelle (Lichtemitter), einen Lichtdetektor und eine Auswerte- und Anzeigeeinrichtung enthält. Zweckmäßigerweise wird eine Kupplung zwischen Temperatursensor und Meßgerät angeordnet. Innerhalb oder außerhalb des Meßgerätes verzweigt sich der Lichtwellenleiter, um den Temperatursensor sowohl mit der Lichtquelle als auch mit dem Lichtdetektor zu verbinden. Diese Verzweigung kann sich sich auch im Temperatursensor befinden, so daß der Lichtwellenleiter als Mehrfachleiter zum Meßgerät führt.

Das von der Lichtquelle ausgehende weiße Licht wird von der Flüssigkristallschicht (LC-Schicht) reflektiert und über die Verzweigung auf den Lichtdetektor gelenkt. Vor dem Detektor angebrachte Filter sorgen dafür, daß nur die Intensität bestimmter Wellenlängen gemessen wird, wobei beispielsweise eine Wellenlänge als Referenz verwendet werden kann.

Beispiele für andere Möglichkeiten zur Erzeugung einer temperaturunabhängigen Referenz sind

a) die Verwendung der an der˜ vorderen Faserstirnfläche rückreflektierten Intensität (Fresnel-Reflexion)

b) die Fresnel-Reflexion an einer transparenten Lack-Schutzschicht auf dem Flüssigkristall und

c) die Reflexion an einem nicht schwarzen Hintergrund, vor dem sich die LC-Schicht befindet.

Für einfache Temperaturmessungen ohne Anspruch auf gute Streckenneutralität une Langzeitstabilität kann anstelle der Weißlichtquelle beispielsweise auch eine Leuchtdiode mit geeigneter Emissionswellenlänge gewählt werden.

Für die Temperaturmessung mit Hilfe des erfindungsgemäßen Temperatursensors ergeben sich folgende Vorteile:

- einfaches und daher sehr kostengünstiges Prinzip
- hohe Meßgenauigkeit (± 0,1 °C), keine Temperatur-Hysterese
- hohe Empfindlichkeit und kurze Ansprechzeit durch sehr geringe eingesetzte Flüssigkristall-Menge und geeigneten Sensor-Aufbau
- sehr kleine, kompakte Sensorspitze, dadurch punktuelle Messungen möglich
- der Meßort muß nicht, wie bei den bisherigen Anwendungen von Flüssigkristall-Temperaturindikatoren, sichtbar sein; Meßort udn Anzeige können räumlich getrennt sein
- durch die elektronische Auswertung können reflektierte Lichtanteile auch außerhalb des sichtbaren Spektralbereiches noch ausgewertet werden, so daß der meßbare Temperaturbereich sowohl nach oben zu kürzeren Wellenlängen als auch nach unten zu längeren Wellenlängen erweitert wird
- im Gegensatz zu Temperatursensoren auf der Basis fluoreszierender Verbindungen gehorcht beim erfindungsgemäßen Sensor das Meßlicht den physikalischen Gesetzen der Reflexion und läuft mit hohem Wirkungsgrad in der Meßfaser zur Auswerteeinheit zurück
- der Sensor ist unempfindlich gegenüber elektromagnetischen Feldern und statischen elektrischen und magnetischen Feldern
- Meßwert-Verfälschungen durch schrägen Blickwinkel, wie sie bei visueller Betrachtung ungekapselter Flüssigkristalle auftreten können, sind nicht möglich, da die Beleuchtung des Flüssigkristalls und Rückführung des Meßlichtes definiert über den Lichtwellenleiter erfolgen. Die spektrale Reinheit der Farbe kann über die numerische Apertur gesteuert werden
- auch eine visuelle Beurteilung der Farbe über Lichtwellenleiter ist möglich.

Durch geeignete Wahl der Flüssigkristall-Mischung kann in weiten Grenzen ein erfaßbarer Temperaturbereich gewählt werden, der dem Meßproblem angepaßt ist.

Beispiele für Anwendungen des erfindungsgemäßen Temperatursensors sind
- Temperaturmessungen im Bereich der Medizin, z.B. Tumorbehandlung durch Mikrowellen; Oberflächentemperatur-Messungen auf Haut; tomographische Untersuchungen
- Temperaturmessungen in explosiver Umgebung
- Temperaturmessungen bei Mikrowellenerwärmung, z.B. in industriellen Prozessen oder im Haushalt.

Die Figuren zeigen Möglichkeiten der Gestaltung des erfindungsgemäßen Temperatursensors. Es bedeuten

    1 Schutzkappe,
    2 das temperaturempfindliche Element,
    3 den Lichtwellenleiter,
    4 die Versiegelung und
    5 einen aufgeschrumpften Schlauch

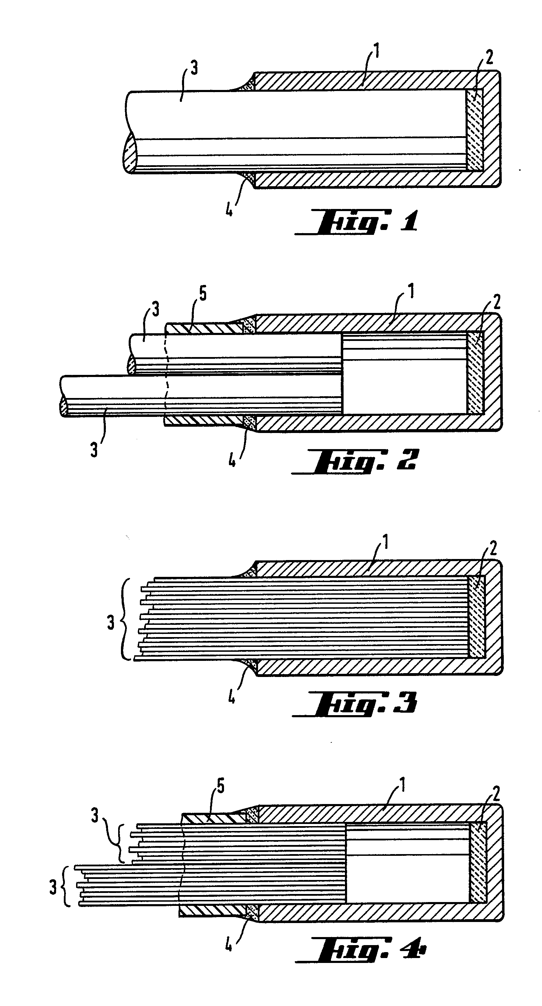

In Figur 1 ist ein Temperatursensor dargestellt, welcher nur einen einzigen Lichtwellenleiter enthält. An der Innenseite der geschlossenen Stirnseite der Schutzkappe (1) befindet sich ein Flüssigkristall (2). Der Lichtwellenleiter (3) ist soweit in die Kappe (1) hineingeschoben, daß er mit seiner Stirnfläche den Flüssigkristall (2) berührt. Die Versiegelung (4) schützt den Flüssigkristall (2) vor atmosphärischen Einflüssen.

Der Temperatursensor gemäß Figur 2 enthält zwei Lichtwellenleiter (3), welche in einem Abstand entsprechend etwa dem Dreifachen des Durchmessers der Lichtwellenleiter vor dem Flüssigkristall (2) enden und durch einen aufgeschrumpften Schlauch (5) zusammengehalten werden.

Figur 3 zeigt die Verwendung eines ganzen Bündels von Lichtwellenleitern (3). Im übrigen ist der Aufbau des Temperatursensors in dieser Figur der gleiche wie der des Sensors in Figur 1.

Der Temperatursensor gemäß Figur 4 besitzt den gleichen Aufbau wie der Sensor gemäß Figur 2, mit dem Unterschied, daß die beiden Lichtwellenleiter (3) gegen mehrere Bündel von Lichtwellenleitern ausgetauscht sind.

**Beispiel 1**

Ein mikrogekapselter Flüssigkristall wurde in einen Lack eingearbeitet, der direkt auf die Stirnfläche eines Polymer-LWL (1 mm ⌀) aufgetragen wurde. Der vom Flüssigkristall vorgegebenen meßbare Temperaturbereich liegt bei 25°C bis 45°C. Nach Aushärten des Lackes wurde die empfindliche Sensorspitze durch eine Schutzkappe aus einem geschwärzten PTFE geschützt. Der Boden der Kappe war nur 0,1 mm dick, um einen guten Wärmekontakt zum Meßobjeckt zu haben. Der Sensor wurde mit einem Meßgerät verbunden. Das von einer lampe ausgehende weiße Licht wurde über den LWL zur Flüssigkristall-Schicht gebracht. Das selektiv reflektierte Licht einer bestimmten Wellenlänge war ein Maß für die Temperatur an der Faserspitze. Es wurde über einen Y-Verzweiger auf einen Detektor mit vorgeschalteten Filtern gelenkt, der die Lichtintensität bei 630 nm und 800 nm maß. Während die Intensität bei 630 nm stark von der Temperatur abhing, war die Intensität bei 800 nm temperaturunabhängig und diente als Referenzsignal für Lichtquellenschwankungen oder Änderungen der LWL-Transmission (Streckenneutralität). Der nur von der Temperatur abhängige Quotient I(630 nm)/I(800 nm) war die Meßgröße, die direkt auf der Temperaturskala geeicht werden konnte.

**Beispiel 2**

Zwei Quarzglas-Multimode-Lichtwellenleiter (je 125 μm ⌀), welche mit einer Lichtquelle und einem Detektor in einem Meßgerät verbunden waren, wurden an einem Ende mittels eines Schrumpfschlauches aus Kunststoff gefaßt. Nach dem Schrumpfen umschloß der Schlauch fest die Lichtwellenleiter. Auf das zusammengefaßte Ende der Lichtwellenleiter wurde eine schwarz lackierte Aluminiumkappe, auf deren Innenseite eine dünne unverkapselte Flüssigkristall-Schicht aufgebracht war, aufgeschoben. Die Flüssigkristall-Schicht hatte einen Abstand von 300 μm von den beiden Faserstirnflächen, um eine gute Einkopplung der reflektierten Intensität in den zum Detektor führenden LWL zu gewährleisten. Um die Flüssigkristall-Schicht vor UV-Licht zu schützen, mußte das von der Lampe emittierte UV-Licht durch ein vorgeschaltetes UV-Sperrfilter entfernt werden. Der Flüssigkristall war im Bereich -10°C bis +10°C empfindlich. Die mit dem Sensor erreichte Meßgenauigkeit lag bei ±0,1°C. Durch die hohe Wärmeleitfähigkeit und geringe Masse der Alukappe hatte der Sensor eine kurze Ansprechzeit von 1 bis 2 Sekunden.

**Beispiel 3**

Es wurde ein Aufbau analog zu beispiel 2 gewählt, wobei jedoch zwei 500 μm ⌀ Polymer-Lichtwellenleiter und eine mikrogekapselte LC-Schicht eingesetzt wurden. Zur Verbesserung der Streckenneutralität wurde der Lackmischung, die den Flüssigkristall enthielt, ein Weißpigment zugesetzt, das eine geringe zusätzliche Licht-Reflexion bewirkte. Diese war unabhängig von der Temperatur und konnte als Referenzwert zur Verbesserung der Langzeitstabilität des Temperatursensors ver-

wendet werden.

**Ansprüche**

1. Temperatursensor, bestehend aus einer Schutzkappe, in welcher sich ein chiral nematischer Flüssigkristall mit helixförmiger molekularer Orientierung befindet und in welcher mindestens ein Lichtwellenleiter endet.

2. Temperatursensor nach Anspruch 1, dadurch gekennzeichnet, daß die Schutzkappe die Form eines zylindrischen Rohres hat, welches an der einen Stirnseite offen und an der anderen Stirnseite verschlossen ist.

3. Temperatursensor nach Anspruch 1, dadurch gekennzeichnet, daß die Schutzkappe aus Metall, Polymer oder Keramik besteht.

4. Temperatursensor nach Anspruch 1, dadurch gekennzeichnet, daß der Flüssigkristall sich an der Innenseite der verschlossenen Stirnseite der Schutzkappe befindet.

5. Temperatursensor nach Anspruch 1, dadurch gekennzeichnet, daß der Flüssigkristall sich in Mikrokapseln in einer Lackschicht befindet.

6. Temperatursensor nach Anspruch 1, dadurch gekennzeichnet, daß der Lichtwellenleiter an der offenen Stirnseite der Schutzkappe gegenüber dem Flüssigkristall endet.

Fig. 1

Fig. 2

Fig. 3

Fig. 4